# EUROPEAN PATENT APPLICATION

(11) **EP 1 112 867 A1**
(43) Date of publication of application: **04.07.2001**
(21) Application number: 99830818.3
(22) Date of filing: 30.12.1999
(51) Int. Cl.: B60B 3/02, B60B 3/06, B60B 25/00, B60B 25/10

(54) **A motor-vehicle wheel**

(71) Applicant: Hayes Lemmerz S.p.A., 25020 Dello-Brescia (IT)
(72) Inventor: Raza, Luigi, I-25063 Gardone Val Trompia - Brescia (IT); Bergamaschi, Vincenzo, I-25016 Ghedi - Brescia (IT)
(74) Representative: Maccalli, Marco

(57) **Abstract**

A motor-vehicle wheel (100) comprising a rim (110) having a first bead (115i) and a second bead (115e) defining a well (120) for coupling with a tyre (105), a flange (140) extending towards the inside of the rim (110) in the vicinity of the second bead (115e), the flange (140) being disposed in an outer position when the wheel (100) is fitted on the motor-vehicle, a first hump (125i) and a second hump (125e) projecting from an inner surface of the well (120) in the vicinity of the first bead (115i) and of the second bead (115e), respectively, for cooperating with corresponding beads (130i, 130e) of the tyre (105), the second hump (125e) having a hollow structure. The second hump (125e) includes at least one added element (155) and means (170, 180a, 180b) for fixing the at least one added element (155) to the rim (110), each added element (155) forming at least one cavity (185) with the inner surface of the well (120); alternatively, the second hump (125e) is integral with the rim (110) and includes at least one exposed cavity (205) extending from the interior of the well (120).

## Description

The present invention relates to a motor-vehicle wheel.

Wheels are commonly used in motor-vehicles of various types such as, for example, cars. A problem with motor-vehicle wheels is constituted by their weight which considerably affects the performance and fuel consumption of the motor vehicle on which they are fitted.

To solve this problem, wheels of various types made of light alloy (for example aluminium) are available. Alloy wheels have a very low weight; moreover, an alloy wheel has a wheel disc which is constituted by a hub and by a flange connected to one another by means of spokes, and which is disposed towards the outside of the motor-vehicle, achieving a particularly good-quality appearance.

Various solutions for further reducing the weight of alloy wheels have been proposed in recent years. One particular known solution consists in producing a hump with a hollow structure in the rim, the hump being disposed in the region of the flange and cooperating with a respective tyre bead; in particular, the disc and the rim are produced separately by casting and are then welded together to form the hollow hump.

A disadvantage of this solution is that the weld between the disc and the rim has to be able to withstand the forces transmitted to the disc by the rim; the weld also has to be airtight in order to maintain the inflation pressure of the tyre. This requires the use of special materials and extremely refined production techniques which thus increase the final cost of the wheel.

The object of the present invention is to overcome the above-mentioned drawbacks. In order to achieve this object, a motor-vehicle wheel as described in the first and fifth claims is proposed.

Briefly, the motor-vehicle wheel comprises a rim having a first bead and a second bead defining a well for coupling with a tyre, a flange extending towards the inside of the rim in the vicinity of the second bead, the flange being disposed in an outer position when the wheel is fitted on the motor-vehicle, a first hump and a second hump projecting from an inner surface of the well in the vicinity of the first bead and of the second bead, respectively, for cooperating with corresponding beads of the tyre, the second hump having a hollow structure. The second hump includes at least one added element and means for fixing the at least one added element to the rim, each added element forming at least one cavity with the inner surface of the well; alternatively, the second hump is integral with the rim and includes at least one exposed cavity extending from the interior of the well.

Moreover, the present invention also proposes two corresponding methods for the production of the wheel.

Further characteristics and the advantages of the wheel for a motor-vehicle according to the present invention will become clear from the following description of a preferred embodiment thereof, given by way of non-limiting example with reference to the appended drawings, in which:
Figures 1a and 1b show the wheel as a whole and with parts separated, respectively,
Figure 2a shows a different embodiment of the wheel,
Figures 2b and 2c show some details of the wheel, and
Figure 3 shows a core used to produce the wheel.

With reference in particular to Figure la, this shows a motor-vehicle wheel unit constituted by a wheel 100 made of a light-alloy (for example, aluminium alloy), on which a tubeless tyre 105 is fitted. The wheel 100 includes a rim 110 having a bead 115i and a bead 115e which are disposed in an inner position and in an outer position, respectively, when the wheel unit is fitted on the motor vehicle. The inner bead 115i and the outer bead 115e of the rim 110 define a well 120 for coupling with the tyre 105.

A hump 125i and a hump 125e project from an inner surface of the well 120 in the vicinity of the inner bead 115i and of the outer bead 115e, respectively. The inner hump 125i and the outer hump 125e have respective active surfaces 127i and 127e. The tyre 105 terminates in two beads 130i, 130e which cooperate with the respective active surfaces 127i, 127e and the respective beads 115i, 115e in order to anchor the tyre 105 to the wheel 100, maintaining the correct inflation pressure of the tyre (even without the use of an inner tube). The humps 125i, 125e are extended humps and have profiles such as to hold the tyre 105 in its seat even when it is deflated.

A valve 135 for the inflation of the tyre 105 is disposed in the vicinity of the outer hump 125e; the valve 135 is of the electronic type and includes a tyre-pressure sensor 105. The wheel 100 also has a flange 140 which extends towards the inside of the rim 110 in the vicinity of the bead 115e; the flange 140 is disposed in an outer position when the wheel unit is mounted on the motor vehicle and helps to define the appearance of the wheel 100. A hub 145 is used to connect the wheel unit to an axle of the motor vehicle (not shown in the drawing). A plurality of spokes 150 (7 in the embodiment in question) connect the rim 110 to the hub 145 in the vicinity of the flange 140.

The outer hump 125e has a hollow structure. The hollow structure is formed only in the outer hump 125e which, owing to the presence of the flange 140, has a substantial thickness; the inner hump 125i, on the other hand, is left with a solid structure since it has a very limited thickness (although the use of a hollow structure is not excluded).

Similar considerations apply if the wheel is used in a motor-vehicle of a different type (for example, a van, a truck), if it is made of a different material (such as magnesium), if it has a different structure, for example, if the humps are not extended humps, if the valve is of the standard type, if a different number of spokes is provided, if a tyre with an inner tube is used, etc.

In the wheel of the present invention, as described in detail below, the outer hump 125e is formed by one or more added elements which are fixed to the rim 110 so as to form one or more cavities with the inner surface of the well 120; alternatively, the outer hump 125e is integral with the rim 110 and includes one or more exposed cavities which extend from the interior of the well 120.

This solution is extremely simple and economical since it permits the use of standard production materials and techniques.

The structure of the present invention in no way restricts the shape of the flange or, therefore, the appearance of the wheel.

Moreover, both the added elements and the exposed cavities are disposed entirely inside the tyre so that they are protected from infiltration of material (such as, for example, stones, soil or water) when the motor-vehicle is in use.

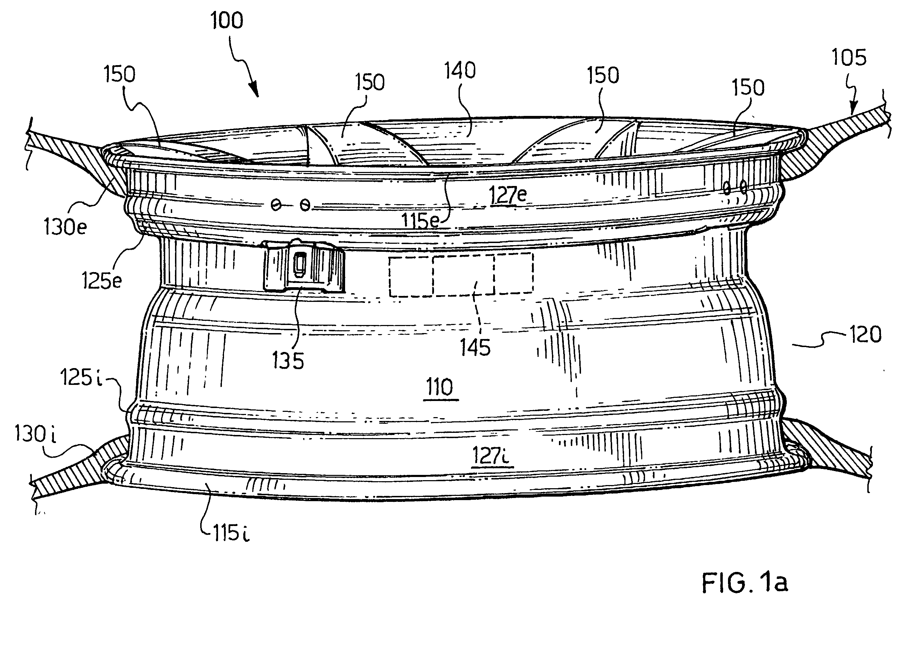

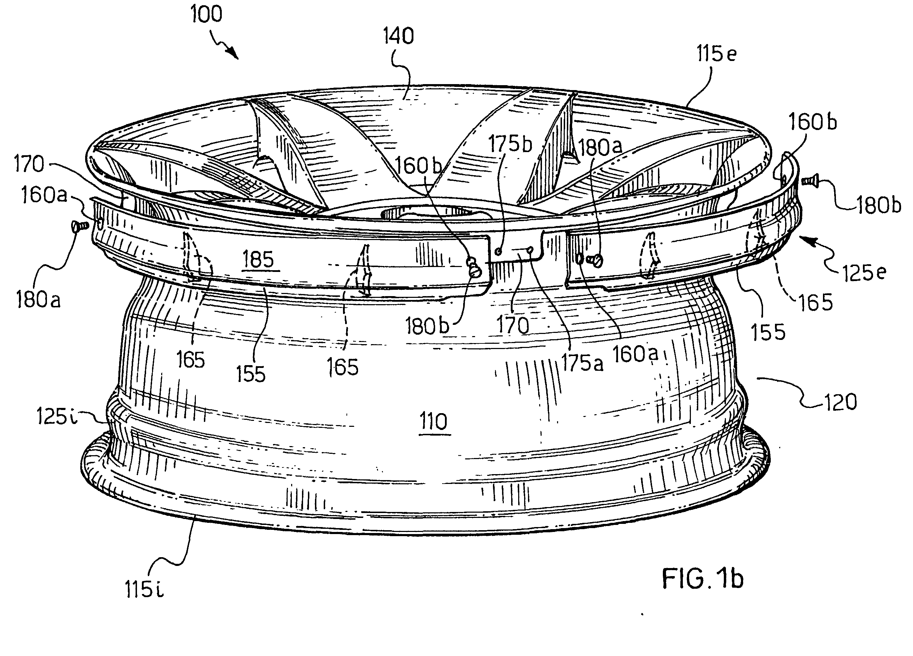

With reference to Figure 1b, the outer hump 125e is formed by four added elements 155 (of which two are shown in the drawing). Each added element 155 is constituted by an aluminium strip extending around a quarter of a circle; the strip is shaped in accordance with the profile of the outer hump 125e. A smooth through-hole 160a and a smooth through-hole 160b are formed in the vicinity of a left-hand longitudinal end and of a right-hand longitudinal end of the added element 155, respectively. One or more stiffening ribs 165 (two in the embodiment in question) disposed between the through-holes 160a and 160b, project from an inner surface of the added element 155 (facing the inner surface of the well 120).

Four abutment elements 170 extend from the inner surface of the well 120 in the vicinity of the outer bead 115e; each abutment element 170 is associated with longitudinal ends of two adjacent added elements 155. A threaded hole 175a and a threaded hole 175b are formed in the abutment element 170 adjacent the through-hole 160a of the added element 155 on the right-hand side of the abutment element 170, and adjacent the through-hole 160b of the added element 155 on the left-hand side of the abutment element 170, respectively.

Each added element 155 abuts the corresponding abutment elements 170. At the same time, an upper longitudinal edge and a lower longitudinal edge of the added element 155 bear against corresponding portions of the inner surface of the well 120 (these portions being finished suitably so as to ensure correct positioning of the added element 155); on the contrary, the height of the ribs 165 is such that they do not come into contact with the (rough) inner surface of the well 120. A tap screw 180a and a tap screw 180b are fitted into the through-hole 160a and into the through-hole 160b, respectively, and engage in the respective threaded holes 175a and 175b so as to fix the added element 155 to the rim 110. The added element 155 thus forms, with the inner surface of the well 120, a cavity 185 delimited by two adjacent abutment elements 170.

In order to manufacture the wheel 100 described above, the various elements of the wheel 100 (except for the added elements 155) are produced by casting in a steel mould. The added elements 155 are produced separately (also by casting) and are then screwed to the rim 110 so as to form the outer hump 125e. Alternatively,. the added elements are welded to the corresponding abutment elements (without any through-holes in the added elements and without any threaded holes in the abutment elements).

The above-described embodiment of the present invention achieves a very substantial reduction (of the order of 10-20%) in the weight of the wheel; this reduction in weight is particularly advantageous since it is achieved in a region of the wheel which is remote from an axis of rotation of the wheel unit so that it brings about a considerable reduction (of the order of 15-30%) in the moment of inertia of the wheel unit. This reduces the fuel consumption of the vehicle and improves its acceleration and the efficiency of the braking system.

Moreover, when the added elements are screwed to the rim, no subsequent step for finishing of the wheel is required (although this solution is more complex from the production point of view). When the added elements are welded to the rim, on the other hand, the wheel can be produced by a process which is very simple from the production point of view (although this solution requires a subsequent step for finishing the wheel).

Finally, the abutment elements and the ribs permit the production of a structure which is extremely light and at the same time sufficiently rigid.

Similar considerations apply if the mould is a loam mould or if the wheel is produced by pressing, if the added elements are produced by rolling or by pressing, if the added elements have a different structure, if there is a different number of ribs, or if a different number of added elements (or even only one added element constituted by a split ring which is opened out resiliently at the fitting stage) is used. Alternatively, the added elements do not include any ribs, are glued to the rim, are fixed to the rim by nails or rivets, etc.

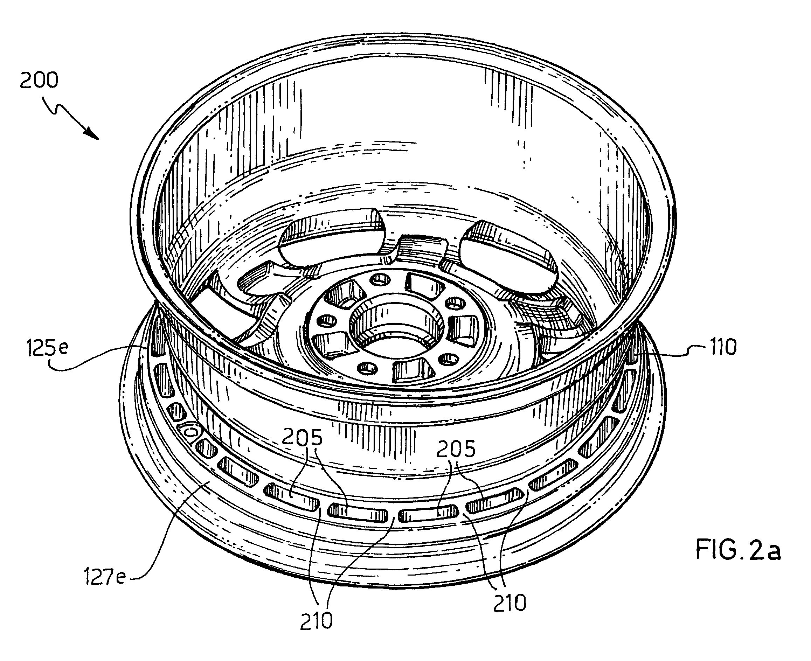

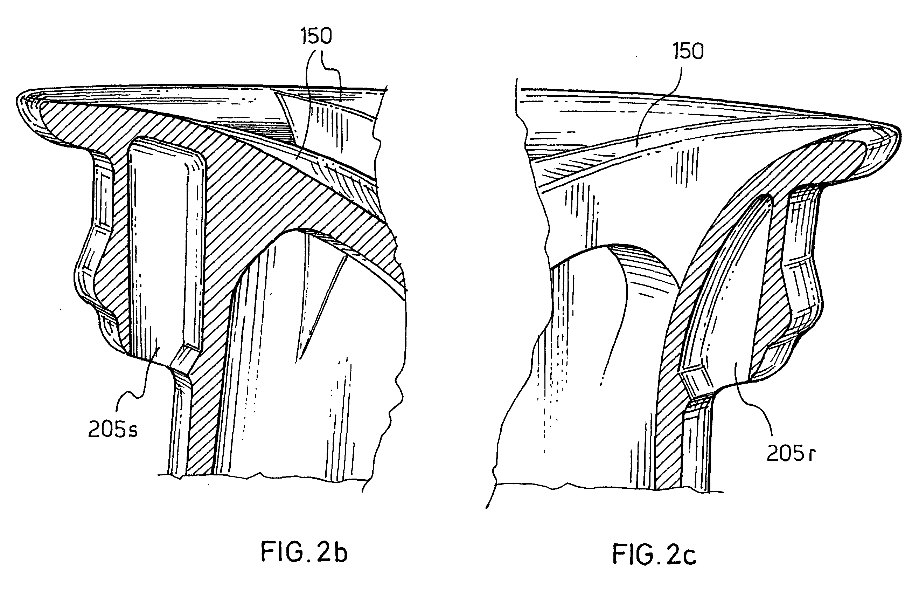

In a different embodiment of the present invention, as shown in Figure 2, (elements corresponding to those shown in the previous drawings are identified by the same reference numerals or symbols, and their explanation is omitted for simplicity of description), a wheel 200 is provided, in which the outer hump 125e is integral with the rim 110 and has some tens of exposed cavities 205 which extend from the interior of the well; in particular, the exposed cavities 205 extend from a surface of the outer hump 125e distinct from the active surface 127e and are separated from one another by ribs 210.

The exposed cavities which are disposed in the region of the spokes 150 and which are indicated 205s in Figure 2b, have generally rectangular cross-sections (in a plane extending through the axis of rotation of the wheel unit). The exposed cavities which are not disposed in the region of the spokes 150 and which are indicated 205r in Figure 2b, on the other hand, have generally triangular cross-sections. The cross-sections of the exposed cavities 205s have larger areas than those of the exposed cavities 205r.

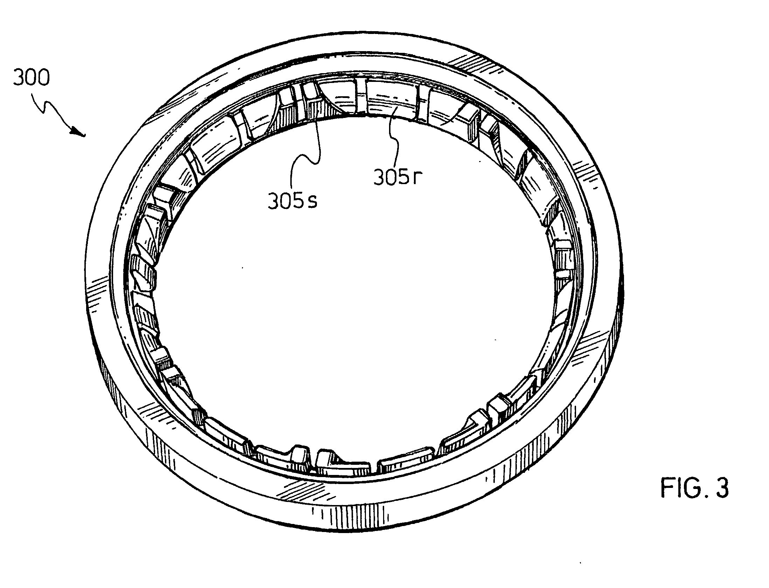

The wheel 200 described above is produced entirely by casting. As shown in Figure 3, the exposed cavities 205 are produced by the arrangement, in the mould, of a core 300 made, for example, of a mixture of sand and resin, which is broken up once the wheel has been removed from the mould. The core 300 is ring-shaped and has, in the vicinity of an inner edge, a plurality of projections 305s, 305r, matching the exposed cavities indicated 205s in Figure 2b and the exposed cavities indicated 205r in Figure 2c, respectively.

The above-described structure is particularly easy to produce since it does not require any additional steps.

The exposed cavities disposed on a surface distinct from the active surface of the outer hump do not interfere in any way with the bead of the tyre fitted on the wheel. The ribs separating the exposed cavities stiffen the wheel and at the same time facilitate the fitting of the tyre, promoting its sliding on the outer hump. Finally, the different shapes of the exposed cavities enable the weight of the wheel to be reduced to a greater extent.

Alternatively, the core has a different structure and is made of a different material, there is a different number of exposed cavities, (or even only one, without any separating ribs), the cavities are arranged differently, are all of the same shape, etc.

Naturally, in order to satisfy contingent and specific requirements, an expert in the art may apply to the above-described motor-vehicle wheel many modifications and variations, all of which, however, are included within the scope of protection of the invention as defined by the following claims.

## Claims

1. A motor-vehicle wheel (100) comprising a rim (110) having a first bead (115i) and a second bead (115e) defining a well (120) for coupling with a tyre (105), a flange (140) extending towards the inside of the rim (110) in the vicinity of the second bead (115e), the flange (140) being disposed in an outer position when the wheel (100) is fitted on the motor-vehicle, a first hump (125i) and a second hump (125e) projecting from an inner surface of the well (120) in the vicinity of the first bead (115i) and of the second bead (115e), respectively, for cooperating with corresponding beads (130i, 130e) of the tyre (105), the second hump (125e) having a hollow structure, characterized in that the second hump (125e) includes at least one added element (155) and means (170, 180a, 180b) for fixing the at least one added element (155) to the rim (110), each added element (155) forming at least one cavity (185) with the inner surface of the well (120).

2. A wheel (100) according to Claim 1, wherein the at least one added element (155) includes a plurality of stiffening ribs (165) projecting from an inner surface of the added element (155).

3. A wheel (100) according to Claim 1 or 2, wherein the at least one added element (155) is screwed to the rim (110).

4. A wheel (100) according to Claim 1 or 2, wherein the at least one added element (155) is welded to the rim (110).

5. A motor-vehicle wheel (200) comprising a rim (110) having a first bead (115i) and a second bead (115e) defining a well (120) for coupling with a tyre (105), a flange (140) extending towards the inside of the rim (110) in the vicinity of the second bead (115e), the flange (140) being disposed in an outer position when the wheel (100) is fitted on the motor-vehicle, a first hump (125i) and a second hump (125e) projecting from an inner surface of the well (120) in the vicinity of the first bead (115i) and of the second bead (115e), respectively, for cooperating with corresponding beads (130i, 130e) of the tyre (105), the second hump (125e) having a hollow structure, characterized in that the second hump (125e) is integral with the rim (110) and includes at least one exposed cavity (205) extending from the interior of the well (120).

6. A wheel (200) according to Claim 5, wherein the at least one exposed cavity (205) extends from a surface of the second hump (125e) distinct from an active surface (127e) cooperating with the corresponding bead (130e) of the tyre (105).

7. A wheel (200) according to Claim 6, further comprising a hub (145) and a plurality of spokes (150) connecting the rim (110) to the hub (145) in the vicinity of the flange (140), the at least one exposed cavity (205) comprising a plurality of first exposed cavities (205s) which are disposed in the region of the spokes (150) and a plurality of second exposed cavities (205r) which are not disposed in the vicinity of the spokes (150), the first exposed cavities (205s) having larger areas, in cross-section, than the second exposed cavities (205r).

8. A process of manufacturing a motor-vehicle wheel (100), comprising the step of forming a rim (110) having a first bead (115i) and a second bead (115e) defining a well (120) for coupling with a tyre (105), a flange (140) extending towards the inside of the rim (110) in the vicinity of the second bead (115e), the flange (140) being disposed in an outer position when the wheel (100) is fitted on the motor-vehicle, a first hump (125i) projecting from an inner surface of the well (120) in the vicinity of the first bead (115i) for cooperating with a corresponding bead (130i) of the tyre (105), characterized by the step of fixing at least one added element (155) to the rim (110) for obtaining a second hump (125e) projecting from the inner surface of the well (120) in the vicinity of the second bead (115e), each added element (155) forming at least one cavity (185) with the inner surface of the well (120).

9. A process of manufacturing a motor-vehicle wheel (200), comprising the step of producing, by casting in a corresponding mould, a rim (110) having a first bead (115i) and a second bead (115e) defining a well (120) for coupling with a tyre (105), a flange (140) extending towards the inside of the rim (110) in the vicinity of the second bead (115e), the flange (140) being disposed in an outer position when the wheel (100) is fitted on the motor-vehicle, a first hump (125i) and a second hump (125e) projecting from an inner surface of the well (120) in the vicinity of the first bead (115i) and of the second bead (115e), respectively, for cooperating with corresponding beads (130i,130e) of the tyre (105), characterized by the step of providing a core (300) in the mould for obtaining, in the second hump (125e), at least one exposed cavity (205) extending from the interior of the well (120).
